## Europäisches Patentamt

## European Patent Office

## Office européen des brevets

(11) Numéro de publication: **0 028 426**
**A1**

(12) # DEMANDE DE BREVET EUROPEEN

(21) Numéro de dépôt: **80200896.1**

(22) Date de dépôt: **24.09.80**

(51) Int. Cl.³: **G 05 B 19/10**

(30) Priorité: **08.10.79 FR 7925404**

(43) Date de publication de la demande:
**13.05.81 Bulletin 81/19**

(84) Etats Contractants Désignés:
**DE GB NL SE**

(71) Demandeur: **CONTROLE ET DECOLLETAGE Société Anonyme dite**
**31, rue du Vernand**
**F-74102 Annemasse(FR)**

(72) Inventeur: **Fuchs, Olivier**
**Les Curtines**
**Juvigny F-74100 Ville-La-Grand(FR)**

(74) Mandataire: **Meylan, Robert Maurice**
**c/o Bugnion SA Conseils en Propriété Industrielle 10,**
**Route de Florissant Case 42**
**CH-1211 Geneve 2(CH)**

(54) **Comparateur électronique pour le contrôle de cotes.**

(57) Le comparateur comprend des touches alphabétiques et numériques (8, 9, 10) pour l'introduction de programmes de mesure et pour la commande de ces programmes. Il comprend deux claviers montés respectivement sur les deux faces d'un volet (5) verrouillable et rabattable autour d'un axe horizontal (6). Le clavier monté sur la face intérieure du volet est un clavier de programmation, tandis que le clavier extérieur (8, 9), seul accessible par l'opérateur, ne présente que les touches nécessaires à la commande. Le comparateur est destiné au contrôle de cotes de pièces usinées.

_Fig. 1_

EP 0 028 426 A1

Comparateur électronique pour le contrôle de cotes.

La présente invention concerne un comparateur électronique pour le contrôle de cotes, en particulier le contrôle de cotes de pièces usinées.

On connaît déjà des comparateurs électroniques comprenant un boîtier abritant des circuits de traitement de données délivrées par des moyens de prise de mesure en vue de les comparer à des valeurs théoriques mémorisées, ces comparateurs comprenant des touches alphabétiques et numériques pour l'introduction de programmes de mesure et pour la commande de ces programmes par un opérateur.

Dans les comparateurs connus, toutes les touches sont groupées sur un seul clavier fixe. Or une partie seulement des touches de ce clavier sont utilisées pour la commande du comparateur. D'autre part, il est essentiel que l'opérateur chargé d'effectuer les contrôles au moyen du comparateur ne puisse pas modifier les programmes de mesure et les valeurs numériques introduites dans le comparateur telles que les valeurs théoriques de référence et les tolérances admises. A cet effet, il est prévu, dans les comparateurs connus, des moyens électroniques de verrouillage de la programmation, le déverrouillage se faisant par l'introduction d'un code au moyen du clavier. On peut toutefois craindre que le code soit rapidement connu de tous les utilisateurs, ce qui peut rendre tentant pour l'opérateur de procéder lui-même à des modifications de programmes. En outre, le code de déverrouillage risque d'être introduit accidentellement.

La présente invention vise à empêcher toutes manipulations des touches de programmation par l'opérateur n'ayant pas la compétence pour le faire et de faciliter simultanément l'actionnement des touches de commande en faisant disparaître sur le panneau de commande les touches inutiles pour cette commande.

A cet effet, le comparateur selon l'invention présente deux claviers montés respectivement sur chacune des faces d'un volet verrouillable dans un panneau du comparateur, le clavier monté sur la face intérieure du volet étant un clavier de programmation, tandis que le clavier monté sur la face extérieure, seul accessible par l'opérateur, ne présente que les touches nécessaires à la commande du comparateur.

Selon une forme d'exécution préférée de l'invention, le volet est articulé autour d'un axe horizontal au bord inférieur du panneau de commande et d'affichage du comparateur, de telle sorte qu'en position ouverte et rabattue, le clavier intérieur se trouve en position horizontale à l'extérieur du comparateur, c'est-à-dire dans une position particulièrement adéquate pour son utilisation.

En position fermée et verrouillée, par exemple au moyen d'une serrure à clef, le volet vient s'intégrer dans le panneau de commande. La réduction du nombre des touches apparentes dans cette position permet de constituer un clavier alphabétique aéré plus facile à utiliser, l'espace libéré permettant d'apposer des indications plus complètes et plus claires à côté de chacune des touches de commande. Une fermeture hermétique à la poussière permet en outre d'abriter efficacement le clavier de programmation.

Selon d'autres formes d'exécution, le volet pourrait être articulé autour d'un axe vertical ou encore être monté coulissant ou de toute autre manière, l'essentiel étant de grouper sur les deux faces du volet les touches des deux claviers, les touches du clavier de commande étant montées en parallèle avec leurs homologues du clavier de programmation.

Le dessin annexé représente, à titre d'exemple, une forme d'exécution de l'invention.

La figure 1 représente le comparateur avec son volet fermé.

La figure 2 représente le même comparateur avec son volet ouvert.

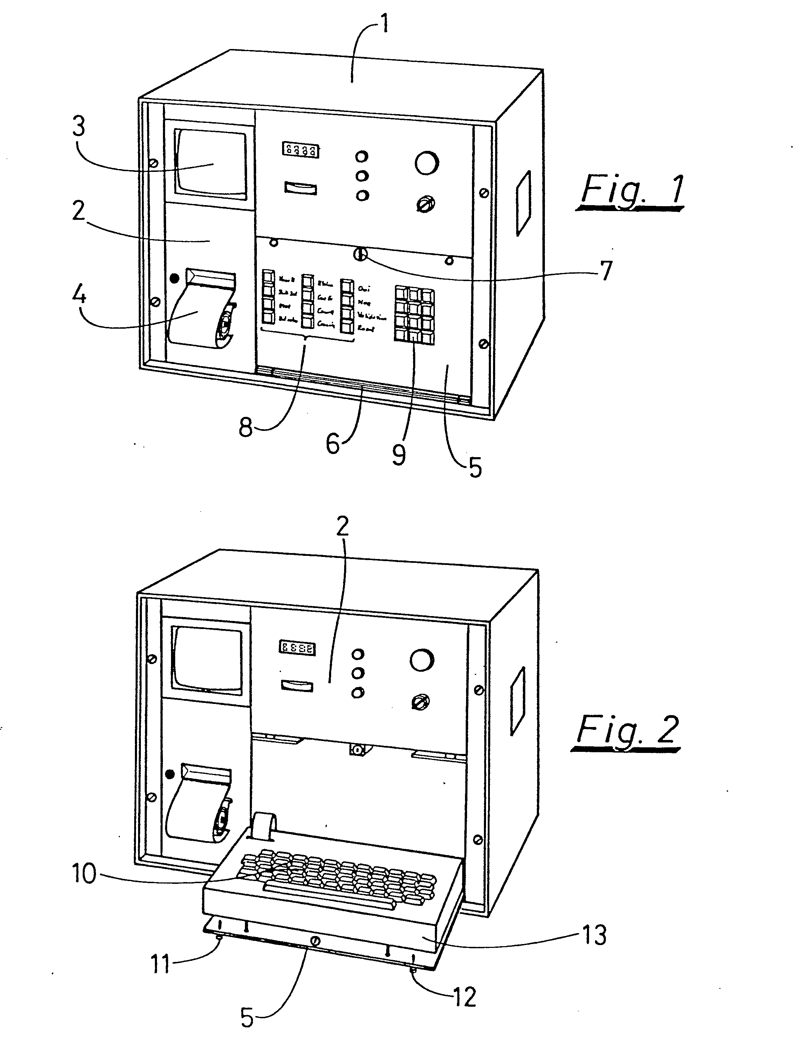

Ce comparateur comprend un boîtier 1 abritant les circuits de traitement de données délivrées par des moyens de prise de mesure, notamment des mémoires programmables et des circuits d'analyse comprenant des micro-processeurs. La face avant du comparateur est occupée par un panneau de commande et d'affichage 2 comprenant notamment un écran de visualisation 3 et un rouleau de papier 4 pour une imprimante. Une partie du panneau 2 est occupée par un volet 5 articulé autour d'un axe horizontal 6 au bord inférieur du panneau 2. En position fermée, représentée à la figure 1, le volet 5 est verrouillé au moyen d'une serrure 7. Il présente alors sur sa face visible un ensemble de touches alphabétiques 8, comprenant éventuellement des touches munies d'un autre symbole, mais assimilables à des touches alphabétiques, réparties en trois colonnes

- 4 -

nettement séparées les unes des autres. A côté de chacune de ces touches est inscrite clairement la fonction de ces touches. Les caractères portés par les touches ne sont là que pour rappeler la correspondance avec les touches homologues du clavier intérieur. Les touches numériques 9 sont groupées à part en un ensemble logique. Ces touches sont utilisées essentiellement pour la numérotation des pièces.

En position ouverte, telle que représentée à la figure 2, le volet 5 est rabattu en position horizontale laissant apparaître un clavier complet 10 analogue à un clavier de machine à écrire. De manière à ne pas reposer sur les touches 8 et 9, le volet 5 est muni de deux pieds 11 et 12. Les contacts commandés par les touches du clavier 10 sont montés sous celui-ci dans un boîtier 13 situé en face des touches 8 et 9, ce qui permet le branchement en parallèle des touches 8 et 9 et de leurs homologues du clavier 10 par un cablage de longueur minimum.

L'articulation du volet 5 telle que représentée semble être la plus avantageuse, mais tout autre mode d'articulation ou de fixation amovible au panneau 2 peut être envisagé. Le volet 5 pourrait par exemple coulisser latéralement de manière à dégager le clavier intérieur. On pourrait même prévoir la possibilité de séparer complètement le volet du panneau.

Revendications de brevet.

1. Comparateur électronique pour le contrôle de cotes, comprenant un boîtier abritant des circuits de traitement de données délivrées par des moyens de prise de mesure en vue de les comparer à des valeurs théoriques mémorisées, le comparateur comprenant des touches alphabétiques et numériques pour l'introduction de programmes de mesure et pour la commande de ces programmes par un opérateur, caractérisé en ce qu'il présente deux claviers montés respectivement sur chacune des faces d'un volet verrouillable dans un panneau du comparateur, le clavier monté sur la face intérieure du volet étant un clavier de programmation, tandis que le clavier monté sur la face extérieure, seul accessible par l'opérateur, ne présente que les touches nécessaires à la commande du comparateur.

2. Comparateur selon la revendication 1, caractérisé en ce que ledit volet est articulé autour d'un axe horizontal à la base du panneau frontal du comparateur, de telle sorte qu'il peut être rabattu en position horizontale en avant du comparateur.

3. Comparateur selon l'une quelconque des revendications 1 ou 2, caractérisé en ce que les touches alphabétiques du clavier extérieur sont disposées en colonnes verticales espacées l'une de l'autre.

*Fig. 1*

*Fig. 2*

**0028426**

Numéro de la demande

Office européen des brevets

**RAPPORT DE RECHERCHE EUROPEENNE**

EP 80 20 0896

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| P | FR - A - 2 447 056 (LGZ LANDIS & GYR ZUG AG)(publiée 14-08-1980) <br> * Page 6, ligne 32 - page 7, ligne 12; page 4, ligne 32 - page 6, ligne 26; figure 1 * | 1-3 | G 05 B 19/10 |
| X | & DE - B - 2 902 604 (publiée 30-08-1979) <br><br> -- <br><br> US - A - 4 080 759 (CINCINNATI MILACRON-HEALD CORP.) <br> * Résumé * <br><br> ---- | 1 | |

**DOMAINES TECHNIQUES RECHERCHES (Int. Cl. 3)**

G 05 B 19/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| | Le présent rapport de recherche a été etabli pour toutes les revendications | |
|---|---|---|
| Lieu de la recherche <br> La Haye | Date d'achèvement de la recherche <br> 18-02-1981 | Examinateur <br> CORNILLIE |

OEB Form 1503.1   06.78